# EUROPEAN PATENT APPLICATION

(11) **EP 1 621 085 A1**
(43) Date of publication of application: **01.02.2006**
(21) Application number: 05106785.8
(22) Date of filing: 22.07.2005
(51) Int. Cl.: A23L 3/015, A23L 3/3463, A23L 3/349, A23B 4/20, A23B 4/00, A23L 1/317, A23B 4/22

(54) **Methods for preserving food products**

(30) Priority: 30.07.2004 US 903016
(71) Applicant: KRAFT FOODS HOLDINGS, INC., Northfield, Illinois 60093 (US)
(72) Inventor: Turek, Evan Joel, 60048, Libertyville (US); Yousef, Ahmed E., 43221, Columbus (US); Chism, Grady William, Indianapolis, Indiana 46202 (US); Shellhammer, Thomas H., 97330, Corvallis (US)
(74) Representative: Smaggasgale, Gillian Helen

(57) **Abstract**

An improved method is provided for inactivating microorganisms in food products by introducing an edible phenolic compound in a food product and subjecting the resulting food product containing phenolic compound to high pressure conditions. This particular combination of physical and chemical treatments on the food products inactivates undesirable microorganisms in a food product to a significantly greater degree possible than achieved with any one of the treatments by itself, and the combined antimicrobial effect of these different types of treatments is synergistically greater than any additive effect that might be expected from the individual treatments.

## Description

### FIELD OF THE INVENTION

The present invention generally relates to food preservation and, more particularly, to methods for inactivating microorganisms in food products.

### BACKGROUND OF THE INVENTION

The food processing industry has investigated or used a variety of methods to enhance the shelf life stability and wholesomeness of food products. Towards these ends, heat and chemical based methods have been devised for inhibiting microbial growth or for reducing the level of these in food products.

Direct or indirect application of heat to the food is a commonly used method for pasteurizing food products. However, such heat can damage the food matrix, resulting in undesirable flavor and/or textural changes. Nutritional breakdown also can occur. An alternative to heat treatment is the use of ingredients which have antimicrobial properties. Compounds such as potassium sorbate, propionates, or benzoates are often added to foods to protect against microbial spoilage. However these compounds are only useful against certain classes of microorganisms, and in some cases, can adversely affect the flavor of products. Foods can also be protected from microbial action by a class of proteins known as bacteriocins (e.g., nisin, pediocin, and colicin) which are generally created in fermentation processes and have known antimicrobial and/or bacteriostatic properties.

The possible antimicrobial activity of food preservatives such as potassium sorbate and food additives conventionally classified as phenolic antioxidants (e.g., tertiary butylhydroquinone (TBHQ)) have been investigated against *Listeria monocytogenes* in a model milk system (Payne et al., "The Antimicrobial Activity of Phenolic Compounds Against *Listeria Monocytogenes* and Their Effectiveness in a Model Milk System," *J. Food Protection*, 52, 151-153 (1989)). Propyl paraben was the only consistently active inhibitor observed throughout the report testing.

Canadian published Patent Application 2,058,455 suggests a synergistic effect of lantibiotics (e.g., nisin) in combination with a selected agent against gram positive bacteria such as *Listeria monocytogenes*. The selected agent is identified as amino acids, aliphatic mono- and di-carboxylic acids, phenolic antioxidant antimicrobials, benzoic acid including salts and esters thereof, or food gums. Although a considerable number of possible phenolic antioxidant candidates (e.g., 1-7C aliphatic esters of parahydroxy benzoic acid, BHT, BHA, and TBHQ) were identified, methyl paraben was the only phenolic antioxidant illustrated in combination with nisin.

Commercially, it is desirable to reduce the amount of nisin needed for effecting microbial inhibition, as the maximum level at which nisin may be introduced into foodstuffs is subject to govemment regulation. For instance, nisin addition levels in finished foodstuffs is currently limited to 250 ppm in the United States (see 21 C.F.R. §184.1538).

High pressure processing (HPP) has been investigated as a method for preservation of foods. In such processing, high hydrostatic pressure without thermal treatment is applied to a food product to reduce its microbial load. For example, U.S. Patent 6,635,223 discloses methods for inactivating microorganisms in products (e.g., food, cosmetic, and pharmaceutics) packed in a flexible container using high pressure processing. Sufficiently high hydrostatic pressure conditions are thought to permanently destabilize cytoplasmic cell membranes of food borne microorganisms, thereby reducing their survivability and activity without causing damage to the food matrix. As a "non-thermal" technology, HPP offers the advantage of not causing heat-related changes to food quality. However, high-pressure treatments are not widely used because of high equipment and operating costs associated with attaining very high pressures required to effect such cellular destabilization.

Furthermore, high pressure treatment cannot always achieve, at commercially viable processing times or pressures, the desired level of microbial inactivation due to a "tailing" effect. Initially upon the application of high pressure to a food having a relatively high microbial load, the microbial load is significantly reduced, often by a reduction factor of greater than 10⁶, within several minutes. After the initial substantial reduction, the effectiveness of HPP diminishes and considerably longer treatment times are needed to effect continued microbial destruction (i.e., the tailing effect). For instance, tailing has been observed in the treatment of *Listeria monocytogenes* on vacuum-packaged frankfurters by application of high pressure processing (Lucore, et al., "Inactivation of *Listeria monocytogenes* Scott A on Artificially-Contaminated Frankfurters by High-Pressure Processing," *J. Food Prot.,* 63, 662-664 (2000)). This tailing behavior has also been demonstrated in microbial media (Tay et al., "Pressure Death and Tailing Behavior of Listeria Monocytogenes Strains Having Different Barotolerances," *J. Food Prot.,* 66, 2057-2061 (2003)).

Ideally, it would therefore be desirable to enhance the effectiveness and degree of microbial inactivation of a short-duration high pressure treatment, while employing commercially practical pressures.

High pressure in combination with the bacteriocin lacticin 3137 has been investigated as a possible technique for enhancing food safety at lower hydrostatic pressure levels (Morgan et al., "Combination of hydrostatic pressure and lacticin 3147 causes increased killing of *Staphylococcus* and *Listeria*," *J. Appl. Microbio.,* 88, 414-420 (2000)). Prior investigations discussed therein refer to the use of high pressure in combination with bacteriocins such as nisin and pediocin for inhibition of food borne microorganisms.

Investigators have reported that the resistance of *Listeria monocytogenes* to high hydrostatic pressure treatment is reduced when the microbial cells have been sensitized with butylated hydroxyanisole (BHA) at the time of pressure treatment (Mackey et al., "Factors Affecting the Resistance of *Listeria monocytogenes* to High Hydrostatic Pressure," *Food Biotechn., 9,* 1-11 (1995)). Butylated hydroxy toluene (BHT) was not effective. Thus, it appears that this sensitizing effect was not a general characteristic of such antioxidants.

There remains a need for more efficient approaches for inactivating microorganisms and/or inhibiting microbial activity that enhance food shelf life stability and quality without damaging the food matrix and/or nutrient content, and facilitate compliance with any applicable regulatory limits on additive loading levels. The present invention fulfills these, as well as other needs and objectives, as will be apparent from the following description of the present invention.

### SUMMARY OF THE INVENTION

The present invention generally relates to methods for inactivating microorganisms and/or inhibiting microbial growth in food products which combines introduction of an edible phenolic compound (preferably an edible hydroquinone) into food products and applying high pressure processing to the edible hydroquinone-containing food products.

This combination of chemical and physical treatments on the food products inactivates undesirable microorganisms in food products to a greater degree possible than that achieved with either treatment by itself. Moreover, the microbial reduction obtained with this combined treatment is synergistically greater than the additive effects expected from the individual treatments.

In a further embodiment, the chemical treatment of the foodstuff, in addition to the edible phenolic compound, also includes introduction of a lantibiotic (e.g., nisin, lacticin, lactocin S, and the like). The combination of high pressure processing and such a multi-chemical treatment (i.e., phenolic compound and lantibiotic) has been experimentally observed to provide an even greater inactivation of some microorganisms in a food product environment than achieved with the individual treatments or high pressure processing with only one of the additives.

This synergistic effect permits the use of lower pressures and lower concentrations of chemical preservatives while still achieving robust microbial reduction. This invention allows a more efficient and economical treatment than has been available before.

The methods of this invention are generally applicable as an antimicrobial treatment for food products. In one embodiment, the methods of this invention are used to pretreat ready-to-eat foods (e.g., ready-to-eat meat products) to reduce microorganisms in the food product and increase the product shelf stability and food quality. Suitable ready-to-eat meat products that can be treated by the methods of this invention include, for example, processed meat products such as sausages, frankfurters, lunch meats, and the like.

For purposes herein, the term "inactivation," and variants thereof, generally refers to bactericidal effects induced upon microorganisms present in the food product which reduce microbial load. Inactivated microorganisms generally are non-viable. It will be appreciated that the antimicrobial effects of methods of this invention may additionally include bacteriostatic effects on viable microorganisms (i.e., inhibition of microbial growth). The term "log reduction" refers to the decrease in log₁₀ colony forming units (CFUs) per milliliter or gram, as appropriate, in a culture, medium, or food product.

### BRIEF DESCRIPTION OF THE FIGURE

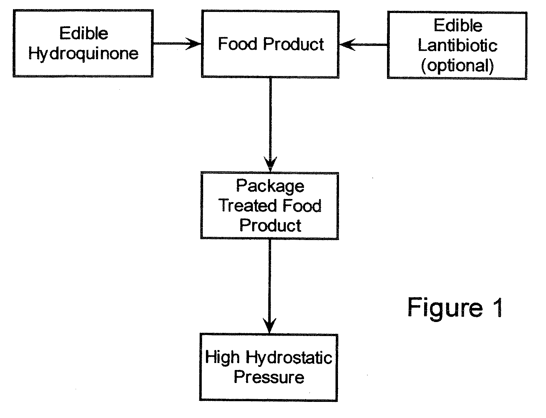

Figure 1 provides a flowchart illustrating the general process of the present invention.

### DETAILED DESCRIPTION

The present invention is based on the discovery that combinations of high pressure processing (HPP) and edible phenolic compounds (preferably hydroquinones) can significantly reduce, and often totally eliminate (i.e., below detection limits), the presence of viable microorganisms in food products.

In one preferred embodiment of this invention, a method is provided for inactivating microorganisms in a ready-to-eat food product by subjecting the food product to high pressure processing in combination with treatment with an edible phenolic compound. The antimicrobial effect may be further increased by additionally including a lantibiotic with the edible phenolic compound.

Food treated with high pressure processing generally is perceived as fresher and sustains less damage, especially with regard the food matrix, as compared to similar heat treated foods. However, as shown herein, HPP alone has limited ability to inactivate or reduce high loads of certain microorganisms (e.g., *Listeria monocytogenes*) from ready-to-eat foods (especially ready-to-eat meat products). Similarly, phenolic compounds, including hydroquinone, and lantibiotic compounds, when used individually or in combination, do not significantly reduce microflora including *Listeria monocytogenes* in such food products. By contrast, combined physical/chemical treatment processes, according to this invention, have been observed to significantly reduce, and in certain cases totally eradicate (i.e., reduce below detection limits), high loads (e.g., 10⁶ CFU/g) of *Listeria monocytogenes* in such food products. Generally, the detection limit for *Listeria monocytogenes* for current methods is about 0.05 CFU/g or lower.

Moreover, the present invention may also employ lower pressures applied for shorter times, and/or lower chemical additive levels, while still maintaining sufficient microbial inactivation due to the synergistic effect of the combined treatments, thereby lowering processing costs (especially related to the high pressure processing equipment required) and making it easier to comply with current and future regulations applicable to allowable levels for the specific chemical additives.

The food products that can be effectively and beneficially treated by methods of the present invention are not particularly limited. Such food products encompass those intended for human consumption as well as animal food products. Such food products include, for example, edible substrates such as meats and meat products. Such meats and meat products include, for example, ham, beef, salami, chicken, turkey, including whole parts or processed meat products made therefrom. The meat products may also include sausages, frankfurters, lunch meats, and so forth. Other food products which may be treated by the process of this invention include: dairy products, such as cheese, milk, cream, yogurt, and the like; mayonnaise, dressings, and the like; edible oils; fish and fish products; egg products; beverages; animal feeds; fruits and processed fruit products; vegetables and processed vegetables; individually and in combinations thereof.

This invention, however, is especially useful for the treatment of meat and meat products. More specifically, the microbial inactivation method of the present invention is especially useful as applied to ready-to-eat meat products such as processed meat products (e.g., sausages, frankfurters, lunch meats, and the like).

Non-limiting examples of the phenolic compounds include *tert-*butylhydroquinone (3-*t*-butyl-1,4-dihydroxy benzene; TBHQ), butylated hydroxytoluene (BHT), butylated hydroxyanisole (BHA), carvacrol (2-methyl-5-(1-methylethyl)phenol), propyl gallate, catechin (2R-(3,4-dihydrophenyl-3,4-dihydro-2H-1benzopyran-2S,5,7-triol)), hydroquinone, isoeugenol, methyl paraben, phenol, 2,4,5-trihydroxybutyrophenone, thymol, and rosemary extract. Preferred phenolic compounds include *tert*-butylhydroquinone, butylated hydroxytoluene, carvacrol, and rosemary extract. In one preferred embodiment, the edible phenolic compound is selected from non-substituted and substituted hydroquinone compounds that have an inactivating effect on one or more types of microorganisms in a food environment. A hydroquinone compound is a dihydroxy benzene compound. In one embodiment, the hydroquinone compounds are alkyl-substituted hydroquinone compounds. The alkyl substituent can be branched or linear. In one particular embodiment, the alkyl substituent is a lower alkyl substituent, such as a 1-6C alkyl group. The most preferred phenol compound for use in the present invention is *tert-*butylhydroquinone.

The edible phenolic compound is introduced into the food material in an amount sufficient to induce significant inactivation of any microorganisms present when used in conjunction with high pressure processing. Preferably, the edible phenolic compound is mixed with the food product prior to the HPP treatment. The effective amount, including the effective minimal amount, of the edible phenolic compound needed to achieve this result can be empirically determined for a given pressure level and pressure exposure period of time. The amount of the edible phenolic compound required to achieve effective microbial inactivation in the food product is significantly reduced in the present invention relative to the amounts required in the absence of any pressure treatment. In a further embodiment, for a given set of high pressure processing conditions, it has been found that the level of certain viable microorganisms, such as *Listeria monocytogenes,* in a food product may be reduced to below its detection limit at an increased, yet commercially viable and acceptable, concentration of phenolic compound in the treated food. This is a beneficial finding as it can provide at least a partial solution to tailing behavior in certain microorganisms. Generally, the phenolic compound is added at about 100 to about 300 ppm, more particularly about 100 to about 200 ppm; of course, the effective amount may vary depending on other parameters (e.g., specific high pressure processing conditions, presence and amounts of lantibiotic adjuncts, desired level of microbial reduction, and the like).

The synergistic effect in inactivation of microorganisms achieved by combining the phenolic compound treatment with high pressure is highly beneficial. Among other advantages, it makes it easier to comply with any regulatory mandates on maximum levels of this type of food additive as the amount of phenolic compound introduction can be reduced.

In an optional refinement, a lantibiotic can be used in conjunction with the edible phenolic compound (and especially with hydroquinone) to intensify the antimicrobial treatment of the food product and provide significantly better microbial inactivation effects. The lantibiotics refer to a group of bacteriocins containing the amino acid lanthionine. Lantibiotics include ribosomally synthesized peptide bacteriocins contain from 19 to 34 amino acids produced by various microorganisms including *Lactococcus* species, *Bacillus* species and *Streptomyces* species. Useful lantibiotic materials include, for example, nisin, subtilin, pep 5, epidermin, gallidermin, cinnamycin, duramycin, ancovenin, and the like, as well as combinations thereof.

A preferred lantibiotic for use in the present invention is nisin. Nisin is an antimicrobial polypeptide produced by certain strains of *Lactococcus lactis.* Nisin can be manufactured through pure-culture fermentation of these bacteria with subsequent purification and drying. For purposes herein, the term "nisin" generally includes, without limitation thereto, the natural nisin molecules nisin A and nisin Z. Nisin is most soluble in acid substrates and becomes progressively less soluble as the pH increases. Commercial preparations of nisin may contain residual solids from the fermentation which are insoluble and can produce cloudy, aqueous suspensions, but this has no detrimental effect on the efficacy of the nisin; the solids, if desired, can be removed. Nisin from other sources may be used.

Nisin, or other lantibiotic, is introduced into the food material generally at a level of 0 to about 10,000 international units/g (IU/g). Preferably, a lantibiotic (preferably nisin) is included in the present treatment method at a level of about 50 to about 250 IU/g, more preferably at about 100 to about 200 IU/g. As used in conjunction with high pressure treatment on a food product and the edible phenolic compound, the loading level of phenolic compound to achieve effective microbial inactivation in the food product is significantly reduced in the presence of lantibiotic relative to the use of phenolic compound alone for the chemical treatment of the food product. Similarly, the loading level of lantibiotic useful to enhance microbial inactivation is significantly reduced relative to the use of the lantibiotic alone for the chemical treatment of the food product. This is desirable as it makes it easier to also comply with any regulatory mandates on maximum levels of this type of food additive.

The introduction of the edible phenolic compound, and optionally the lantibiotic, can be accomplished in any convenient manner that substantially and uniformly disperses or distributes the chemical(s) over the surface and/or throughout the food product. In some food products (e.g., non-processed foods), chemical treatment of the exposed food surfaces may be the primary focus; for many processed foods, the control of microbial activity throughout the bulk and surfaces of the food products is focused upon. The present methods allow for surface and bulk treatments, either one alone or in combination.

The chemical treatment agents (e.g., phenolic compound or hydroquinone alone or in combination with a lantibiotic) can be introduced during the manufacture of the food product. For example, the edible phenolic compound can be introduced into milk before cheese product manufacture, or it may be admixed with meat slurry before it is extruded into a desired shape. Alternatively, the foodstuff can be formulated and then the chemical treatment agents can be added and then the foodstuff shaped into a desired shape. Alternatively, the foodstuff can be formulated and formed into a desired shape, followed by surface treatment with a powder or solution containing the chemical treatment agents in a manner effective to coat the surface and/or obtain penetration of the chemicals into the foodstuff. For example, the food material may be suspended or dipped in a solution containing the chemical treatment agents, or the solution can be sprayed onto the surface of the food material. Combinations of these application methods may also be used. For example, the chemical treatment agents may be incorporated into the bulk food products which are then formed into the desired shape, followed by an additional surface treatment with the chemical treatment agents (which may contain the same or different chemical treatment agents at the same or different levels as the bulk treatment).

High pressure is applied to food substrates pretreated with the edible phenolic compound by a hydrostatic food processor or device providing comparable functionality. High pressure processing for treated foods, according to this invention, generally may involve placing the chemically-treated food, preferably in packaged form, inside a pressure vessel which contains a pressure transmitting fluid. The vessel is closed, and hydrostatic pressure within the vessel is increased to a desired level, such as by pumping the transmitting medium into the vessel by means of an external pressure intensifier. The pressure is held for a predetermined time period, and then the pressure is relieved whereupon the processed packaged food can be removed from the high pressure processing system. Preferably, the chemically-treated food is packaged in a sealable flexible container, such as a flexible film pouch or bag, for high pressure processing.

Conventional hydrostatic food processors can be used in the practice of the present invention. An example is a hydrostatic food processor (Quintus QFP-6 from ABB Autoclave Systems, Inc., Columbus, OH) containing a water/propylene glycol (Houghto-Safe 620-TY, Houghton International, Inc., Valley Forge, PA) mixture (1:1, vol/vol) as the pressure transmitting fluid.

The pressure applied to a food product via high pressure processing generally ranges from about 300 to about 900 MPa, more typically about 400 to about 700 MPa.

The temperature during the treatment process is not critical. Generally, however, the pressure treatment is conducted at less than about 80°C, preferably about 5 to about 80°C, and more preferably at about 20 to about 50°C. If desired, various portions of the process may be conducted at different temperatures. Preferably the food product is not exposed to high temperatures (i.e., greater than about 50°C) for any significant time period (i.e., greater than about 5 minutes) during or after the present process; more preferably, there is essentially no exposure to such high temperature during or after the present process. Of course, food products such as, for example, meat or meat products, may be exposed to temperatures sufficiently high to cook or precook the product before the pressure treatment step.

The high pressure processing times, such as conducted at the above-described pressure and temperature conditions, generally range from about 1 to about 20 minutes, more typically about 3 to about 10 minutes. In general, although not necessarily in all situations, the processing time may be shortened with increasing applied pressure, and may need to be increased with decreasing applied pressure, to maintain a desired level of microbial inactivation.

The magnitude and/or duration of application of pressure needed to induce significant reduction in microbial loads with methods of the present invention are lowered as compared to processes relying on high pressure treatment alone. Typically, such conventional pressure treatments (i.e., no added chemical treatment agents) require pressures in the range of about 300 to about 900 MPa for about 5 to about 60 minutes to provide significant inactivation of microorganisms; even in these cases, tailing may not be eliminated. Thus, the present invention allows use of lower pressures for shorter time periods and allows reduction of costs associated with the pressure equipment and operation thereof as well as reducing safety issues generally associated with using higher pressures in a manufacturing setting.

This invention allows a food substrate challenged or inoculated with high levels (e.g., about 10⁶ CFU/g or more) of *Listeria monocytogenes* populations to be treated to achieve greater than 5-log reduction in pathogen populations, and preferably greater than 6-log reduction. Thus, the process of this invention is highly effective and can reduce the pathogen's population, should the food product become contaminated with *Listeria),* below detection limits. Of course, efforts should be made to avoid any *Listeria* contamination in food products; thus, in commercial operation, the present invention is preferably used to significantly reduce the risk of *Listeria* or other microbiological contamination. The present invention should be used with good manufacturing practices in the food production facility to avoid contamination in the first place so as to provide backup or additional protection. As those skilled in the art will realize, a food processing line known to be contaminated with *Listeria* (even at low levels) should be shut down and the source of contamination located and eliminated. Thus, in a food processing line, the level of, for example, *Listeria* before the high pressure treatment will be very low and after the high pressure treatment will be below detection limits. The use of the present invention within such a food processing line provides further and significant protection against unknown contamination to provide higher levels of protection for the ultimate consumer without adversely affecting organoleptic properties and at more reasonable costs than has been possible previously.

In another embodiment, a food substrate processed according to methods of this invention has nondetectable levels of *Listeria* (even if contamination has occurred). For purposes of this invention, the presence (or absence) of *Listeria* is detected via a warm enrichment/plating technique wherein about 30 mL of tryptose broth is added, after high pressure processing, to a package containing the treated food product. The mixture is incubated at 37°C for 48 hours, followed by the enrichment (mixture) being streaked on Oxford agar or PALCAM agar, and observing the streaked plate for the presence/absence of *Listeria.* As noted above, a high load of *Listeria monocytogenes* (e.g., about 10⁶ to about 10⁸ CFU/g inoculated food product) may be reduced in a food product below the detection limit as detected via the above-indicated warm enrichment/plating approach, where the treated food product is processed at modest pressures (e.g., about 500 to about 700 MPa), relatively short treatment periods (e.g., about 3 to about 10 minutes), and low temperatures (e.g., about 20 to about 50°C). Tailing effects also may be reduced or eliminated by methods of the present invention. The presence or absence of other microorganisms may be detected using similar techniques modified for the specific microorganism under consideration.

After or before treatment with the process of this invention, the food product may be packaged using any method suitable for the particular type of food product. Preferably and is shown in Figure 1, the food product is packaged before the high pressure treatment. Generally, the food products treated by this method and properly packaged have shelf lives of at least about 2 months, preferably at least about 3 months, under refrigeration conditions. Using the present invention, the actual shelf life may be dictated by reasons other than microbiological stability.

Figure 1 illustrates the general method of this invention wherein a food product is treated with an edible hydroquinone and, optionally, a lantibiotic. The chemically-treated food product is subjected to high pressure. Preferably, the food product is packaged in an appropriate container using appropriate packaging techniques for the retail market prior to the high pressure treatment.

The methods of this invention are effective against a wide variety of microorganisms, including, for example, species of *Listeria, Clostridium, Bacillus, Lactobacillus, Streptococcus, Staphylococcus, Pediococcus,* and *Micrococcus,* individually or in combinations.

The Examples that follow are intended to illustrate, and not to limit, the invention. All percentages used herein are by weight, unless otherwise indicated. All references cited herein are incorporated by reference in their entireties.

**Example 1.** The treatment of sausages inoculated with different strains of *Listeria monocytogenes* was investigated using various combinations of physical (hydrostatic pressure) and chemical (edible hydroquinone and/or lantibiotic) treatments.

The edible hydroquinone was *tert*-butylhydroquinone (TBHQ) at a level of either 0 or 100 ppm. The *tert-*butylhydroquinone was a food grade material obtained from Sigma Chemical Co. (St. Louis, MO). The lantibiotic was nisin at a level of either 0 or 100 IU/g. The nisin used was either pure nisin or a commercial nisin (Nisaplin®), both from Aplin & Barrett, Ltd. (Trowbridge, England). The Nisaplin® sample used contained about 1X10⁶ IU nisin/g (equivalent to about 25 mg nisin/g). Nisin samples were prepared by dissolving nisin powder in distilled water, adjusting the pH to 2 with HCl, and sterilizing at 121°C for 10 minutes. Samples were prepared and used on the same day for each experiment.

Three strains of *Listeria monocytogenes* were used in these challenge studies. *Listeria monocytogenes* Scott A, OSY-8578, and OSY-328, were obtained from the Food Safety Laboratory of the Department of Food Science and Technology at The Ohio State University (Columbus, OH). All experiments were carried out with cultures in stationary phase (grown in tryptose broth (TB; Difco Laboratories, Detroit, MI) for 18 hours at 37°C). The inoculation level was about 10⁶ CFU Listeria per gram of product.

The hydrostatic pressure used was 600 MPa. For comparison purposes, samples were also treated with no hydrostatic pressure (i.e., under atmospheric pressure). A hydrostatic food processor (Quintus QFP-6, ABB Autoclave Systems, Inc., Columbus, OH) was used with a pressure transmitting fluid containing a water/propylene glycol (1:1 vol/vol; Houghto-Safe 620-TY, Houghton International, Inc., Valley Forge, PA). Samples were held in a refrigerator before processing and placed on ice following treatment. The temperature during each run was monitored using a thermocouple and a datalogger (Campbell Scientific, Inc., Logan, UT).

A complete factorial design (i.e., 2x2x2x3=24 treatments) was used and the order of the runs was randomized. Canned Vienna sausage (Armour®, The Dial Corporation, Scottsdale, AZ) was purchased from local grocery stores. For each run, one Vienna sausage (weighing about 16 g) was aseptically removed from the commercial container and transferred into sterile polyethylene bags (Fisher Scientific Co.), and 1 ml of overnight culture (18 h) was inoculated onto the sausage, and the bags massaged by hand to distribute the culture evenly on the surface of the sample. One milliliter of each additive, alone or in combinations, was added, and the bags were sealed using vacuum sealer (Vacmaster, Kansas City, MO). Sample bags were pressurized at 600 MPa for 5 minutes at a temperature of 30-32°C using a hydrostatic food processor (Quintus QFP6). Non-pressurized samples were treated in a similar manner except that no pressure was applied. After high pressure processing, bags were opened aseptically. Fresh Tryptose broth (30 mL) was added into the bags, and resealed bags were incubated at 37°C for 48 hours to recover any surviving population. The presence or absence of L. *monocytogenes* survivors in the samples was determined by streaking the incubated mixture onto Oxford agar and/or PALCAM agar. Each test run consisted of 5 tested bags at a given set of variables; the experiment was repeated 4 times.

Table 1 describes the treatment conditions and average results with regard to inactivation of L. *monocytogenes* for each of set of treatment conditions. Runs 1-6 are control experiments; runs 7 and 8 illustrate the method of the present invention.

**Table 1. Average percentages of bagged sausage samples testing positive for Listeria monocytogenes. Inoculated samples (about 10⁶ CFU Listeria per g product) treated for about 5 minutes under various conditions. Standard deviations (S.D.) are provided in parentheses.**

| **Run** | **Treatment Conditions** | | | **Percentage of Bags Testing Positive For *Listeria* in Batch of 5 (± S.D.)** | | |
|---|---|---|---|---|---|---|
| | **Pressure (MPa)** | **Nisin (IU/g)** | **TBHQ (ppm)** | **Scott A** | **OSY-8578** | **OSY-328** |
| 1 | 0 | 0 | 0 | 100 | 100 | 100 |
| 2 | 0 | 100 | 0 | 100 | 100 | 100 |
| 3 | 0 | 0 | 100 | 100 | 100 | 100 |
| 4 | 0 | 100 | 100 | 100 | 100 | 100 |
| 5 | 600 | 0 | 0 | 85 (± 19) | 95 (± 10) | 95 (±10) |
| 6 | 600 | 100 | 0 | 15 (±19) | 30 (±38) | 10 (±20) |
| 7 | 600 | 0 | 100 | 15 (±30) | 25 (±30) | 20 (±16) |
| 8 | 600 | 100 | 100 | 10 (±30) | 15 (±10) | 15 (±19) |

For all *Listeria* strains tested, the inventive method (runs 7 and 8) provide the best overall protection. The inactivation effects on *Listeria* obtained from combining the hydrostatic pressure treatment and chemical treatment with edible hydroquinone derivative (i.e., run 7) were greater than the additive effects of the individual treatments. Moreover, the combined use of hydroquinone and nisin with the hydrostatic pressure treatment (run 8) resulted in an even greater percentage of inactivation of *Listeria* in the Scott A and OSY-8578 strains. Moreover, this experiment also demonstrates that, when combined with pressure, low levels of hydroquinone and nisin (which, when used alone or even together, essentially had no protective value; see runs 2-3) can be used effectively to inactivate *Listeria*.

**Example 2.** Treatment conditions required for essentially total elimination of *L. monocytogenes* were determined using essentially the same materials and procedures as used in Example 1 except that the nisin level was 0, 100, or 200 IU/g; the hydroquinone level was 0, 100, 200, or 300 ppm; and each experiment was repeated 3 times. The results are shown in Table 2.

**Table 2. Average percentages of bagged sausage samples testing positive for listeria monocytogenes. Inoculated Samples (about 10⁶ CFU Listeria per g of product) treated for about 5 minutes under various conditions. Standard deviations (S.D.) Are provided in parentheses.**

| **Run** | **Treatment Conditions** | | | **Percentage of Bags Testing Positive For *Listeria* in Batch of 3 (± S.D.)** | | |
|---|---|---|---|---|---|---|
| | **Pressure (MPa)** | **Nisin (IU/g)** | **TBHQ (ppm)** | **Scott A** | **OSY-8578** | **OSY-328** |
| 9 | 0 | 0 | 0 | 100 | 100 | 100 |
| 10 | 0 | 0 | 300 | 100 | 100 | 100 |
| 11 | 0 | 100 | 200 | 100 | 60 | 100 |
| 12 | 0 | 200 | 200 | 100 | 25 | 100 |
| 13 | 0 | 200 | 100 | 100 | 100 | 100 |
| 14 | 600 | 0 | 0 | 80 (±20) | 87 (±23) | 93 (± 12) |
| 15 | 600 | 0 | 300 | 0 | 0 | 0 |
| 16 | 600 | 100 | 200 | 0 | 0 | 0 |
| 17 | 600 | 200 | 200 | 0 | 0 | 0 |
| 18 | 600 | 200 | 100 | 0 | 0 | 0 |

No *Listeria* was detected in the inventive method (runs 15-18). These results also show and confirm the inactivation effects on *Listeria* obtained from combining the hydrostatic pressure treatment and chemical treatment via edible hydroquinone were significantly greater than the additive effects of the individual treatment modes. Packaged inventive samples stored at both ambient and refrigerated conditions did not show any signs of microbial growth after one year.

**Example 3.** Three strains of *Listeria monocytogenes* identified in Example 1 were grown in tryptose broth for 18 hours at 37°C. Cultures were centrifuged at 10,000 rpm for 15 minutes at 4°C. Cell pellets were resuspended in phosphate buffer (pH 7.0) and the cell population of each strain was adjusted to 10⁹ CFU/ml. Tert-butylhydroquinone was added at about 100 ppm (10% vol/vol TBHQ/culture). Preparation of sample bags and the high pressure treatment procedures were same as indicated in Example 1. Pressures tested were 300, 500, and 700 MPa. Control and high pressure-treated samples were serially diluted in 0.1 % peptone water and spread-plated on tryptose agar. The plates were incubated at 37°C for 48-72 hours and the colonies were counted. High pressure processing parameters for these runs and the results are listed in Table 3.

**Table 3. Average log reduction for Listeria Monocytogenes strains (initial load of about 10⁹ cfu/ml) in phosphate buffer after pressure treatment in the presence of tert-butylhydroquinone.**

| **Pressme (MPa)** | **Treatment time (minutes)** | **Average Log Reduction** | | | | | |
|---|---|---|---|---|---|---|---|
| | | **Scott A** | | **OSY-8578** | | **OSY-328** | |
| | | **No TBHQ** | **TBHQ** | **No TBHQ** | **TBHQ** | **No TBHQ** | **TBHQ** |
| 300 | 0^{a} | 0 | 0 | 0 | 0 | 0 | 0 |
| | 1 | 0 | 0 | 0.1 | 0.2 | 0 | 0 |
| | 5 | 0.5 | 2.2 | 0.6 | 0.2 | 0.1 | 0 |
| | 10 | 3.4 | 6.5 | 0.7 | 0.8 | 0.3 | 0.2 |
| | 20 | 5.0 | 7.3 | 2.3 | 3.8 | 0.9 | 1.0 |
| | 30 | 6.6 | 7.3 | 4.8 | 5.0 | 1.7 | 1.6 |
| | 40 | 7.0 | ≥8.0 | 5.3 | 5.7 | 2.1 | 2.3 |
| | 50 | -^{d} | - | 5.5 | 7.2 | 1.9 | 2.4 |
| | 60 | - | - | - | - | 2.5 | 3.1 |
| 500 | 0^{b} | 0.5 | 3.8 | 0.1 | 0.2 | 0 | 0.2 |
| | 1 | 5.1 | 7.9 | 3.4 | 7.2 | - | |
| | 5 | 6.9 | 8.0 | 6.1 | 7.6 | 5.3 | |
| | 10 | 5.6 | ≥8.0 | 6.2 | ≥8.0. | 5.3 | 7.6 |
| | 15 | 7.5 | ≥8.0 | - | - | - | 7.8- |
| | 20 | 7.1 | ≥8.0 | 6.1 | 7.9 | 5.9 | ≥7.9 |
| | 30 | 6.6 | ≥8.0 | 6.9 | 7.8 | 5.5 | 7.8 |
| | 40 | - | - | 7.4 | ≥8.0 | 6.7 | ≥7.9 |
| | 50 | - | - | - | - | 6.9 | ≥7.9 |
| 700 | 0^{c} | 4.2 | 7.7 | 4.1 | 7.6 | 2.3 | 5.3 |
| | 0.5 | 5.9 | 7.5 | 5.9 | 7.7 | - | - |
| | 1 | 6.1 | ≥8.0 | 6.1 | 7.8 | 6.7 | ≥8.0 |
| | 2 | 6.9 | ≥8.0 | - | - | - | - |
| | 5 | ≥8.0 | ≥8.0 | 7.7 | ≥8.0 | 7.6 | ≥8.0 |
| | 10 | 7.0 | ≥8.0 | 6.6 | ≥8.0 | 7.3 | ≥7.9 |
| | 15 | 7.7 | ≥8.0 | 5.8 | ≥8.0 | 6.3 | ≥7.9 |
| | 20 | - | - | 6.7 | ≥8.0 | 6.9 | 7.8 |
| | 30 | - | - | - | - | 75 | >8.0 |

| | | | | | | | |
|---|---|---|---|---|---|---|---|
| ^{a} Time zero represents bringing the vessel to 300 MPa, which was followed by immediate depressurization; the come-up time was about 2 minutes 6 seconds. | | | | | | | |
| ^{b} Time zero represents bringing the vessel to 500 MPa, which was followed by immediate depressurization; the come-up time was about 2 minutes 35 seconds. | | | | | | | |
| ^{c} Time zero represents bringing the vessel to 700 MPa, which was followed by immediate depressurization; the come-up time was about 2 minutes 50 seconds. | | | | | | | |
| ^{d} not determined. | | | | | | | |

These results indicate that combination of high pressure and TBHQ eliminated the tailing phenomenon, while high pressure alone did not. More than 8 log reduction indicates that no colony was detected on the plate. The detection level for enumeration was 10 CFU/ml. The initial population of OSY-328 averaged about 8.9 logs; therefore, more than 7.9 log reduction indicates below the detection level.

While the invention has been particularly described with specific reference to particular process and product embodiments, it will be appreciated that various alterations, modifications and adaptations may be based on the present disclosure, and are intended to be within the spirit and scope of the present invention as defined by the following claims.

## Claims

1. A method for treating a food product to inactivate microorganisms which might be present in the food product, said method comprising treating the food product with a composition comprising an edible phenolic compound and subjecting the treated food product to a pressure of at least about 300 MPa.

2. The method of Claim 1, wherein the edible phenolic compound is an alkyl-substituted hydroquinone or *tert*-butylhydroquinone.

3. The method of Claim 1 or 2, wherein the composition further comprises a lantibiotic.

4. The method of Claim 3, wherein the lantibiotic is selected from the group consisting of nisin, subtilin, pep5, epidermin, gallidermin, cinnamycin, duramycin, ancovenin, and combinations thereof.

5. The method of Claim 3, wherein the lantibiotic is nisin.

6. A method of treating a food product to inactivate microorganisms which might be present in the food product, said method comprising introducing about 100 to about 300 ppm edible phenolic compound and about 50 to about 250 IU/g lantibiotic into the food product to provide a treated food product, and applying a pressure of about 300 to about 900 MPa to the treated food product for about 1 to about 20 minutes at a temperature of less than about 80°C.

7. The method of Claim 6, wherein the edible phenolic compound is an alkyl-substituted hydroquinone or *tert*-butylhydroquinone.

8. The method of Claim 6 or 7, wherein the edible phenolic compound is at about 100 to about 200 ppm and the lantibiotic is at about 100 to about 200 IU/g.

9. The method of any one of Claims 6 to 8, wherein the lantibiotic is selected from the group consisting of nisin, subtilin, pep 5, epiderm, gallidermin, cinnamycin, duramycin, ancovenin, and combinations thereof.

10. The method of Claim 8, wherein the edible phenolic compound is *t*-butylhydroquinone and the lantibiotic is nisin.

11. The method of any one of Claims 1 to 10, wherein the microorganism is selected from the group consisting of one or more species of *Listeria, Clostridium, Bacillus, Lactobacillus, Streptococcus, Staphylococcus, Pediococcus,* and *Micrococcus.*

12. The method of Claim 11, wherein the microorganism is *Listeria monocytogenes.*

13. The method of any one of Claims 1 to 12, wherein the food product, after treatment, does not contain detectable levels of the microorganisms.

14. The method of any one of Claims 1 to 13, wherein the pressure is about 400 to about 900 MPa for about 1 to about 20 minutes at a temperature of about 5 to about 80°C.

15. The method of any one of Claims 1 to 14, wherein the pressure is about 500 to about 700 MPa for about 3 to about 10 minutes at a temperature of about 20 to about 50°C.

16. The method of any one of Claims 1 to 15, wherein the food product is selected from the group consisting of meat products, dairy products, fish products, edible oils, egg products, and beverages.

17. The method of any one of Claims 1 to 15, wherein the food product comprises a meat product selected from the group consisting of sausages, frankfurters, and lunch meats.

18. The method of any one of Claims 1 to 17 further comprising packaging the food product.

19. The method of any one of Claims 1 to 17 further comprising packaging the food product prior to application of the pressure.

20. A food product having a shelf life of at least about 2 months under refrigeration conditions, wherein said food product is prepared by a method comprising (1) treating the food product with a composition comprising about 100 to about 300 ppm of an edible phenolic compound and about 50 to about 250 IU/g of a lantibiotic, (2) packaging the treated food product, and (3) subjecting the treated and packaged food product to a pressure of about 300 to about 900 MPa for about 1 to about 20 minutes at a temperature of less than about 80°C.

21. The food product of Claim 20, wherein the food product is selected from the group consisting of meat products, dairy products, fish products, edible oils, egg products, and beverages.

22. The food product of Claim 20, wherein the food product comprises a meat product selected from the group consisting of sausages, frankfurters, and lunch meats.

23. The food product of any one of Claims 20 to 22, wherein the edible phenolic compound is *tert*-butylhydroquinone at about 100 to about 200 ppm and the lantibiotic is nisin at about 100 to about 200 IU/g.

24. The food product of Claim 23, wherein the pressure is about 500 to about 700 MPa and is applied for about 3 to about 10 minutes at a temperature of less than about 50°C.
